# EUROPEAN PATENT APPLICATION

(11) **EP 1 153 720 A1**
(43) Date of publication of application: **14.11.2001**
(21) Application number: 00201671.5
(22) Date of filing: 10.05.2000
(51) Int. Cl.: B29B 17/02, B65G 17/48, G01N 21/89, G01N 21/35, B07C 5/36, B07C 5/342

(54) **Process and apparatus for optically identifying articles, carried by a transport system**

(71) Applicant: DSM N.V., 6411 TE Heerlen (NL)
(72) Inventor: Berghmans, Antonius Christianus, 6216 XS Maastricht (NL); huys, Michiel Joseph Germain, 3500 Hasselt (BE)
(74) Representative: Kleiborn, Paul Erik

(57) **Abstract**

Process for identifying articles which are at least partly made from at least one polymer, using an optical identification unit and a transport system, said process comprising the steps of:
a) positioning the articles in the transport system such that a predetermined surface of each article is in a predetermined position
b) moving the positioned articles past the optical identification unit using the transport system
c) irradiating the predetermined surfaces of the articles, measuring the response of the irradiated surfaces using the optical identification unit, analyzing the response to identify the articles as to the type of polymer,
   wherein the process also comprises the step of:
d) determining when the predetermined surfaces of the articles are accessible by the optical identification unit,
   and that the irradiation, measuring the response, and/or analyzing the response is started for each article individually, while the predetermined surface of said individual article is accessible by the optical identification unit.

## Description

The invention relates to a process for identifying articles which are at least partly made from at least one polymer, using an optical identification unit and a transport system, said process comprising the steps of:
a) positioning the articles in the transport system such that a predetermined surface of each article is in a predetermined position
b) moving the positioned articles past the optical identification unit using the transport system
c) irradiating the predetermined surfaces of the articles, measuring the response of the irradiated surfaces using the optical identification unit, analyzing the response to identify the articles as to the type of polymer.

Such a process is known from WO-A-9906160. In the known process carpets to be identified are moved past an optical identification unit. The carpets to be identified are movably fixed to a transport rail using clamps which are provided with openings through which the carpets can be irradiated during movement past the optical identification unit. The clamps are positioned in such a way that the surfaces of the carpets in the openings of the clamps have a predetermined transverse position relative to the optical identification unit during movement past the optical identification unit. Following identification, the carpets are transported further, and released from the clamps at a location in accordance with their identification.

Typically, such an identification is based on the analysis of the response of the irradiated surface as a result of the irradiation. In particular if the spectral responses of the different polymers to be identified are only slightly different, small variations in measuring conditions can make the distinction between such polymers difficult. This is for instance the case if it is to be distinguished between different types of polyamides, for instance between polyamide-6 and polyamide-6,6 of which the near-infrared spectra are only slightly different. In the process of WO-A-9906160 it appears to be difficult to distinguish between materials of which the responses following irradiation are only slightly different.

In view of the above it is the goal of the invention to provide a process which does not have this disadvantage, or in which this disadvantage is present to a considerable lesser extent.

This goal is achieved according to the invention in that the process also comprises the step of:
d) determining when the predetermined surfaces of the articles are accessible by the optical identification unit,
and in that the irradiation, measuring the response, and/or analyzing the response is started for each article individually, while the predetermined surface of said individual article is accessible by the optical identification unit. According to the invention a very accurate identification is achieved, even if the spectral responses of the polymers to be identified are only slightly different.

As used herein "accessible by the optical identification unit" denotes that the predetermined surface can be reached by the irradiation beam or irradiation beams of the optical identification unit. As used herein "positioning the articles in the transport system such that a predetermined surface of each article is in a predetermined position" denotes positioning the articles in the transpot system such that a predetermined surface of each article is in a predetermined position while the predetermined surface of said article is accesible by the optical identification unit. A predetermined position of the predetermined surface may for instance be a predetermined distance to the spectrometer and/or a predetermined angle with the irradiation beam or irradiation beams of the optical identification unit.

The process of the invention is based on our insight that the accuracy of the identification is improved if it is avoided that the response of an irradiated surface which is not in the predetermined position or the response of other materials than the articles, such as for instance that of a clamp surrounding the predetermined surface, is used for the identification, or if the us of such response is at least lessened.

According to the invention the irradiation, measuring the response, and/or analyzing the response is started for each article individually, while the predetermined surface of said individual article is accessible by the optical identification unit, i.e. at some moment during the period referred to above. It is possible that the irradiation, measuring and analyzing are all started, while the predetermined surface of an individual article is accessible by the optical identification unit. However, this is not necessary. It is for instance also possible that only one or two of the steps of irradiating, measuring and analyzing are started while the predetermined surface is accessible by the optical identification unit, the remaining steps being performed continuously during the process. It is for instance possible that irradiation is performed continuously during the process, and that the measuring and analyzing of the response are started for each article individually, while the predetermined surface of said individual article is accessible by the optical identification unit. As used herein "Starting the analyzing of the response while the predetermined surface is accessible by the optical identification unit" denotes analyzing a set of data which have been measured during a time interval, the start of said time interval being within a period in which the predetermined surface is accessible by the optical identification unit. Preferably, the irradiation and/or measuring the response is started for each article individually, while the predetermined surface of said individual article is accessible by the optical identification unit. More preferably, measuring the response is started for each article individually, while the predetermined surface of said individual article is accessible by the optical identification unit.

In a preferred embodiment, the irradiation, measuring of the response, and/or analyzing the response is terminated for each article individually while the predetermined surface of the individual article is accessible by the optical identification unit. This improves the accuracy of the identification. As used herein "terminating the analyzing of the response while the predetermined surface is accessible by the optical identification unit" denotes analyzing a set of data which have been measured during a time interval, the end of said time interval being within a period in which the predetermined surface is accessible by the optical identification unit. More preferably, the irradiation, and/or measuring of the response is terminated for each article individually, while the predetermined surface of the individual article is accessible by the optical identification unit. Most preferably, measuring of the response is terminated for each article individually, while the predetermined surface of the individual article is accessible by the optical identification unit.

Preferably, the accessibility of the predetermined surface is determined using a sensor. Any sensor may be used which is capable of detecting the arrival and/or presence of an object at a predetermined location. The sensor may be a mechanical sensor or an optical sensor. The mechanical sensor may be any sensor which is capable of detecting the arrival and/or presence of an object at a predetermined location by mechanical contact. The optical sensor may be any sensor which is capable of detecting the arrival and/or presence of an object at a predetermined location. The optical sensor may be based on a principle that an light beam is continuously emitted, and that the interruption of said light beam by the object to be detected, is detected. The optical sensor may also be based on a principle that a light beam is continuously emitted and that the reflection of said light beam by the object to be detected, is detected.

In a preferred embodiment, the positioning of the articles in the transport system comprises fixing the articles to the transport system. In this embodiment positioning the articles such that a predetermined surface of each article is in a predetermined position, can be effectively achieved. Preferably, the predetermined surface of each article has a predetermined distance to the optical identification unit, while the predetermined surface is accessible by the optical identification unit. Preferably, the predetermined surface of each article makes a predetermined angle with the irradiation beam or irradiation beams of the optical identification unit, while the predetermined surface is accessible by the optical identification unit. Fixing the articles to the transport system may for instance be carried out by fixing the articles to fixing means connected to a movable belt of a conveyor or to fixing means which are movably connected to a transport rail. An example how the articles may advantageously be fixed to a transport rail has for instance been described in WO-9906160, the contents of which are herewith incorporated by reference.

Preferably, the articles are fixed to the transport system using fixing means and the accessibility of the predetermined surface is determined by detecting the presence and/or arrival of said fixing means at a predetermined location. Detecting the arrival of said fixing means at the predetermined location may effectively be done using a sensor. Preferably, the fixing means are provided with an optical patch having different optical properties than the fixing means, and the detection of the arrival of the fixing means is detected by detecting the optical patch. Preferably, the optical patch is a reflecting patch.

Preferably, the predetermined surface is within an opening in the fixing means, for instance an opening in a clamp, which has for instance been disclosed in WO-A-9906160.

Preferably, the optical identification unit is an optical spectrometer, such as for instance a Raman spectrometer or an infrared spectrometer. As used herein infrared spectrometers also include mid-infrared spectrometers and near-infrared spectrometers. A very suitable spectrometer has been described in WO-A-9725605, the contents of which are herewith incorporated by reference. A near-infrared spectrometer is very suitable for distinguishing between polyamide-6 and polyamide 6,6.

Methods for analyzing the response are known to the skilled person, and are for instance described in "Multivariate Calibration", by Harald Martens and Tormod Naes, John Wiley & Sons (1991) Great Brittain.

The process according to the invention is in particular suitable if at least part of the articles are at least partly made from a polyamide, for instance polyamide-6 and/or polyamide 6,6. The process according to the invention is very well suitable to distinguish between polymers of which the spectral response following irradiation is only slightly different, such as for instance polyamide-6 and polyamide-6,6. If it is to be distinguished between polyamide-6 and polyamide-6,6, PET and polypropylene, which are typical materials for face fibres of carpets, it is advantageous to use spectral information in the range of 2000 to 3000 nm, preferably 2200 to 2600 nm.

The process according to the invention is very well suitable if the articles are textile articles, more in particular carpet or carpet materials, since in particular for these types of articles the problem often plays a role that a part of the surface which is in a predetermined position is generally surrounded by a part of the surface which is not in said predetermined position. Waste textile articles, waste carpets and/or waste carpet materials can very well be identified using the process according to the invention.

The invention also relates to an apparatus for identifying articles, said apparatus comprising
a) an optical spectrometer (1)
b) a transport system, said transport system comprising a transport rail (2) and transport units (3), the transport units comprising a body (4), coupling means (5) for fixing the articles (6) to the transport units, and a carriage (7), the carriage being movable along the transport rail
c) a guide system (8,9) which is capable of cooperating with the body and/or coupling means, said guide system at least being present in the area of the optical spectrometer

As used herein "present in the area of the optical spectrometer" denotes that the guide system has such a position that it is capable of cooperating with the body and/or coupling means while the transport units are moved past the optical spectrometer. When using this apparatus, a very accurate identification is achieved.

In a preferred embodiment the guide system comprises a guiding element which is essentially parallel to the transport rail, said guiding element being capable of cooperating with the body and/or coupling means. The guiding element may for instance be a guide rail. Preferably, the body and/or coupling means comprise one or more guiding members which can cooperate with the guiding element. More preferably, the body and/or coupling means comprise at least two guiding members which can cooperate with the guiding element. Preferably, the guiding members are rotatable elements, such as for instance wheels.

In a preferred embodiment the guide system comprises a pair of guiding elements which are essentially parallel to the transport rail and which are capable of receiving the body and/or coupling means. The pair of guiding elements may for instance be a pair of guide rails.

Preferably, the guide system comprises a transversal guide system. A transversal guide system includes any system which is capable of preventing movement of the body and/or coupling means in the transversal direction, in particular in the direction of the irradiation beam or irradiation beams of the optical spectrometer.

Preferably, the guide system is a longitudinal guide system. A longitudinal guide system includes any system which is capable of preventing movement of the body and/or coupling means around the transversal direction, in particular around an axis parallel to the irradiation beam or the irradiation beams of the optical spectrometer.

### Brief description of the drawings

Figure 1 shows a schematic view of a preferred embodiment of the process according to the invention.
Figure 2 shows a schematic top view of a preferred embodiment of the process according to the invention.
Figure 3 shows a schematic view of a preferred embodiment in which a guide system is present.

### Description of a preferred embodiment

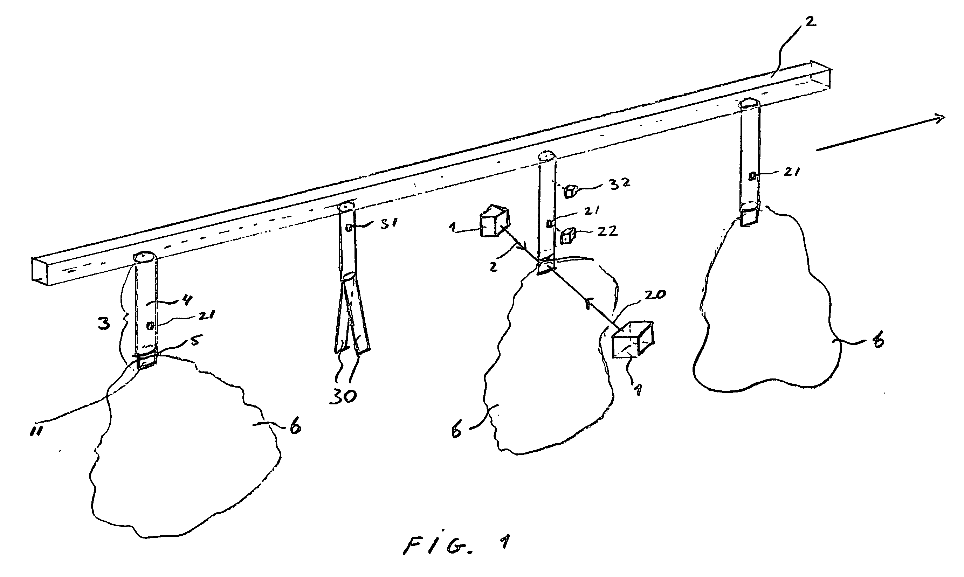

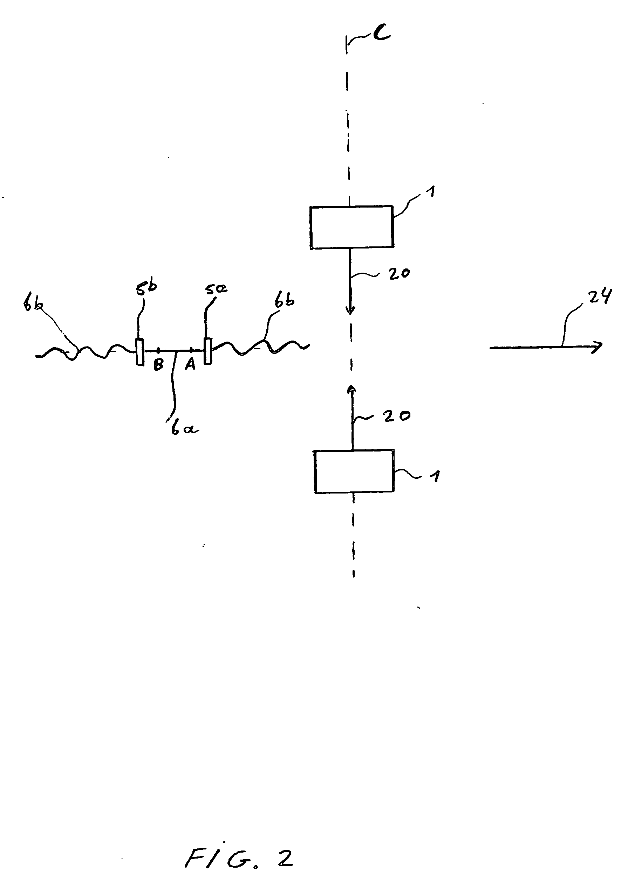

Below, a preferred embodiment of the invention is described with reference to figures 1 and 2. Articles, in this case carpets (6) are fixed to transport rail (2) via transport units (3) comprising a carriage (not shown) which is movable along transport rail (2), a body (4) and clamps (5). Clamps (5) are provided with openings (11) through which a part of the surface of the carpets (the predetermined surface, 6a) can be irradiated with irradiation beams (20) of near-infrared (NIR) spectrometers (1). (only one spectrometer shown in figure 1). Transport units (3) are constructed in such a way that rotation around a vertical axis is prevented during movement past NIR-spectrometers (1). During movement past NIR-spectrometers (1) the predetermined part (6a) of carpets (6) in openings (11) are in a predetermined transverse position. Each transport unit (3) is provided with reflecting patch (21) which is detectable by sensor 22 (which is capable of detecting the reflection of sensor irradiation beam (23) which is continuously emitted) at a moment at which the predetermined surface is accessible by irradiation beams (20), which are continuously on during the process. At the moment that reflecting patch (21) is detected by sensor (22) measuring of the response of the irradiated predetermined surface is started. The measuring of the response is terminated before the predetermined surface has ceased to be accessible by NIR-spectrometers (1). It will be appreciated that it is also possible that reflecting patch (21) has such a position that it is detectable by sensor (22) at a moment before the predetermined surface is accessible by irradiation beams (20) and that the moment at which the predetermined surface becomes accessible by irradiation beams (20) is derived from the rate at which transport takes place. It will be appreciated that it is also possible that irradiation, measuring the response and analyzing the response are started at the moment that reflecting patch (21) is detected.

Figure 2 shows a top view of a the present embodiment. Carpet (6) is fixed in clamp (5) having an opening (11). The distance between both sides (5a and 5b) of clamp (5) is about 3.5 cm. Predetermined surface (6a) of carpet (6) within clamp (5) is in a predetermined position in contrast to the part of the carpet (6b) which is not within the clamp. Carpet (6) is moved in the direction of the arrow (24) at a speed of 1000 m/hour past two NIR-spectrometers (1) having irradiation beams (20) which are continuously on. Reflecting patch (21, not shown) is positioned in such a way that the moment is detected at which point A (about 1 cm from clamp side 5a) crosses line C. At that moment measuring of the response is started. Thus, measuring the response is started while predetermine surface (6a) is accessible by optical spectrometers (1). Spectra are measured (range 2400 to 2510 nm) using a detector in the NIR spectrometers (1) (not shown), the measurement time being about 50 ms. At the moment at which the measuring of the response is terminated, point B (about 1 cm from clamp side 5b) crosses line C, so that the measuring is terminated while the predetermined surface is accessible by spectrometers (8).

The measured response (spectra) are analyzed by known methods to identify the carpet as to the type of polymer, for instance using a principle component analysis.

### Description of a preferred embodiment in which a guide system is present

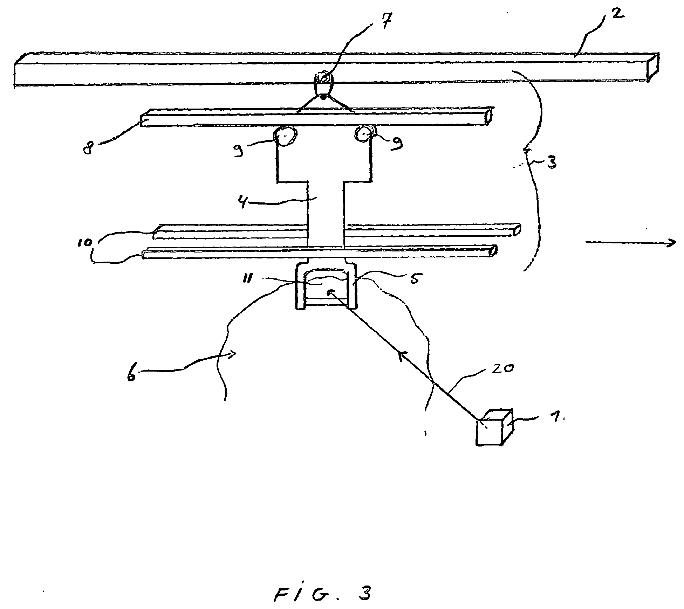

Figure 3 shows transport rail (2) and one transport unit (3) in the area of near-infrared (NIR) spectrometer (1). The arrow indicates the direction of transport. Transport unit (3) comprises a carriage (7) which can be moved in transport rail (2) using a chain (not shown), clamp (5) (coupling means), and a body (4) which connects clamp (5) and carriage (7). A carpet (6) is fixed to clamp (5), having opening (11) through which a part of carpet (6) can be irradiated with the irradiation beam of optical spectrometer (1). In this figure carpet (6) is in a position that it can be irradiated through opening (11) with irradiation beam (20). At its upper part, body (4) is provided with two wheels (9) (guiding members) which can cooperate with guide rail (8). The combination of two wheels (9) and guide rail (8) prevent rotation around an axis parallel to irradiation beam (20). This improves the accuracy of the identification. A pair of guide rails (10) (guiding elements) is also present. Body (4) can be guided between said pair of guide rails (10). This prevents movement of the body (4) and clamp (5) in the transverse direction, which improves the accuracy of the identification. An accurate identification can take place during movement of the carpet past NIR spectrometer (1). The tranport system may for instance be provided with 50 transport units. The transport rate may for instance be 1000 m/hour.

## Claims

1. Process for identifying articles which are at least partly made from at least one polymer, using an optical identification unit and a transport system, said process comprising the steps of:
a) positioning the articles in the transport system such that a predetermined surface of each article is in a predetermined position
b) moving the positioned articles past the optical identification unit using the transport system
c) irradiating the predetermined surfaces of the articles, measuring the response of the irradiated surfaces using the optical identification unit, analyzing the response to identify the articles as to the type of polymer, **characterized in that** the process also comprises the step of:
d) determining when the predetermined surfaces of the articles are accessible by the optical identification unit,
and that the irradiation, measuring the response, and/or analyzing the response is started for each article individually, while the predetermined surface of said individual article is accessible by the optical identification unit.

2. Process according to claim 1, **characterized in that** the irradiation and/or measuring the response is started for each article individually, while the predetermined surface of said individual article is accessible by the optical identification unit.

3. Process according to claim 1 or claim 2, **characterized in that** the irradiation, measuring of the response, and/or analyzing the response is terminated for each article individually, while the predetermined surface of the individual article is accessible by the optical identification unit

4. Process according to any one of claims 1 to 3, **characterized in that** the accessibility of the predetermined surface is determined using a sensor.

5. Process according to any one of claims 1 to 4, **characterized in that** the positioning of the articles in the transport system comprises fixing the articles to the transport system.

6. Process according to claim 5, **characterized in that** the transport system comprises a transport rail and that the positioning of the articles in the transport system comprises fixing the articles to the transport rail.

7. Process according to claim 5 or claim 6, **characterized in that** the articles are fixed to the transport system using fixing means and that the accessibility of the predetermined surface is determined by detecting the arrival and/or the presence of said fixing means at a predetermined location.

8. Process according to claim 7, **characterized in that** the fixing means are provided with an optical patch having different optical properties than the fixing means, and that the detection of the arrival of the fixing means is detected by detecting the arrival of the optical patch.

9. Process according to claim 8, **characterized in that** the optical patch is a reflecting patch.

10. Process according to any one of claims 7 to 9, **characterized in that** the predetermined surface is within an opening in the fixing means.

11. Process according to any one of claims 1 to 10, **characterized in that** the predetermined surface of each article has a predetermined distance to the optical identification unit, while the predetermined surface is accessible by the optical identification unit.

12. Process according to any one of claims 1 to 11, **characterized in that** the predetermined surface of each article makes a predetermined angle with the irradiation beam or irradiation beams of the optical identification unit, while the predetermined surface is accessible by the optical identification unit.

13. Process according to any one of claims 1 to 12, **characterized in that** the optical identification unit is an optical spectrometer.

14. Process according to claim 13, **characterized in that** the optical spectrometer is an infrared spectrometer.

15. Process according to any one of claims 1 to 14, **characterized in that** at least part of the articles are at least partly made from a polyamide.

16. Process according to claim 15, **characterized in that** at least part of the articles are at least partly made from polyamide-6

17. Process according to claim 16, **characterized in that** at least part of the articles are at least partly made from polyamide-6 and that at least part of the articles are at least partly made from polyamide-6,6.

18. Process according to any one of claims 1 to 17, **characterized in that** the articles are textile articles

19. Process according to claim 18, **characterized in that** the textile articles are carpets or carpet materials.

20. Apparatus for identifying articles which are at least partly made from at least one polymer, said apparatus comprising a transport system, an optical spectrometer and a sensor.

21. Apparatus according to claim 20, **characterized in that** the sensor is a mechanical sensor.

22. Apparatus according to claim 20, **characterized in that** the sensor is an optical sensor.

23. Apparatus according to any one of claims 20 to 22, **characterized in that** the transport system comprises a transport rail and fixing means for fixing the articles to the transport rail.

24. Apparatus according to claim 20 to 23, **characterized in that** the fixing means are provided with clamping means said clamping means having openings through which the objects can be irradiated.

25. Apparatus according to any one of claims 20 to 24, **characterized in that** the optical spectrometer is an infrared spectrometer

26. Apparatus according to any one of claims 20 to 25, **characterized in that** the fixing means are transport units, the transport units comprising a body (4), coupling means (5) for fixing the articles (6) to the transport units, and a carriage (7), the carriage being movable along the transport rail, wherein the apparatus also comprises a guide system (8,9) which is capable of cooperating with the body and/or coupling means, said guide system at least being present in the area of the optical spectrometer

27. Apparatus according to claim 26, **characterized in that** the guide system comprises a guiding element (8) which is essentially parallel to the transport rail, said guiding element being capable of cooperating with the body and/or coupling means.

28. Apparatus according to claim 27, **characterized in that** the body and/or coupling means comprise one or more guiding members (9) which can cooperate with the guiding element.

29. Apparatus according to claim 28, **characterized in that** said one or more guiding members are rotatable elements.

30. Apparatus according to any one of claims 26 to 29, **characterized** the guide system comprises a pair of guiding elements (10) which are essentially parallel to the transport rail and which are capable of receiving the body and/or coupling means.

31. Apparatus according to any one of claims 26 to 30, **characterized in that** the guide system is a transversal guide system.

32. Apparatus according to any one of claims 26 to 30, **characterized in that** the guide system is a longitudinal guide system.
